# EUROPÄISCHE PATENTSCHRIFT

(11) **EP 2 110 348 B1**
(45) Veröffentlichungstag und Bekanntmachung des Hinweises auf die Patenterteilung: **30.10.2013**
(21) Anmeldenummer: 08405108.5
(22) Anmeldetag: 17.04.2008
(51) Int. Cl.: B65G 57/03, B65G 61/00

(54) **Palettiereinrichtung sowie Verfahren zum Übergeben von Paketen von einer Annahmestation an einen Paketgreifer**
Palletising device and method for transferring packets from an intake station to a packet grabber
Station de palettisation et procédé de transmission de paquets d'une station de réception vers un dispositif de saisie de paquet

(43) Veröffentlichungstag der Anmeldung: 21.10.2009
(73) Patentinhaber: Müller Martini Holding AG, 6052 Hergiswil (CH)
(72) Erfinder: Liebheit, Stefan, 5603 Staufen (CH)

(56) Entgegenhaltungen:
- EP-A- 1 801 047

## Beschreibung

Die Erfindung betrifft eine Palettiereinrichtung mit einer Annahmestation und einem Paketgreifer. Diese umfasst einen auf einem Maschinengestell der Annahmestation seitlich verfahrbar gelagerten Schlitten, eine auf dem Schlitten angeordnete Paketfördervorrichtung zum Fördern von Paketen von einer Annahmestelle zu einer Übergabestelle, von welcher die Pakete jeweils mit dem Paketgreifer entnehmbar sind, wenigstens zwei auf dem Schlitten nebeneinander angeordnete Paketkammern, in denen die Pakete zentrierbar sind, sowie eine Steuervorrichtung. Jeder Paketkammer ist ein auf dem Schlitten gelagertes Anschlagelement zugeordnet und zwischen einer Arbeitsposition sowie einer Rückzugsposition bewegbar, wobei die Anschlagelemente in der Arbeitsposition in die jeweilige Paketkammer hineinragen. Die Erfindung betrifft zudem ein Verfahren zum Übergeben von Paketen von einer Annahmestation an einen Paketgreifer einer Palettiereinrichtung.

Im Stand der Technik sind zum Palettieren von Paketen Palettiereinrichtungen bekannt, die eine Annahmestation und einen Paketgreifer aufweisen. Die Annahmestation besitzt auf einem Schlitten zwei Paketkammern, in die jeweils mit einer Transportvorrichtung ein Paket ablegbar ist. Durch die Paketfördervorrichtung werden diese Pakete jeweils zu einer Übergabestelle gefördert, dort vom Paketgreifer übernommen und von diesem auf eine Palette abgelegt. Damit ein genaues Palettieren möglich ist, ist es wesentlich, dass die Pakete auf dem Paketgreifer genau positioniert sind. Für eine exakte Übergabe der Pakete an den Paketgreifer können die Pakete vor der Übergabe in der Paketkammer zentriert werden. Zudem ist bei einer bekannten Annahmestation eine Ausstossvorrichtung vorgesehen, die mit dem Maschinengestell fest verbunden ist und mit der die Pakete jeweils aus der Annahmestation in den Paketgreifer geschoben werden.

Aus der EP-A-180 10 47 ist zudem eine gattungsgemäße Palettiereinrichtung bekannt geworden, bei welcher die Ausstosseinrichtung der Annahmestation am Schlitten gelagert ist. Die Ausstossvorrichtung besitzt für jede Paketkammer eine Ausstossplatte, mit der die Pakete jeweils auf den Paketgreifer schiebbar sind. Die Ausstossplatten müssen für jede Übergabe horizontal als auch vertikal bewegt werden, was eine vergleichsweise aufwendige Konstruktion aus vielen Teilen bedingt.

Der Erfindung liegt die Aufgabe zugrunde, eine Palettiereinrichtung der genannten Gattung zu schaffen, die einfacher hergestellt werden kann, dennoch aber eine exakte Positionierung der Pakete auf den Paketgreifer ermöglicht.

Die Aufgabe ist dadurch gelöst, dass der Paketgreifer und die Annahmestation über die Steuervorrichtung so gesteuert werden, dass die Pakete bzw. ein Paket jeweils mit der Paketfördervorrichtung in eine vordere Halteposition gefahren werden und dass die Anschlagelemente jeweils anschliessend im Abstand zu einer Rückseite des Paketes aus der Rückzugsposition in die Arbeitsposition gefahren werden. Danach werden die Pakete bzw. wird das Paket mit dem Paketgreifer jeweils gegen eines der Anschlagelemente bzw. gegen die Anschlagelemente geschoben und an diese angelegt.

Im Gegensatz zu den Ausstossplatten nach dem Stand der Technik müssen die Anschlagelemente bei der Übergabe des entsprechenden Paketes an den Paketgreifer nicht horizontal verschoben werden. Die Pakete werden somit gegen einen stehenden Anschlag bewegt. Die Bewegungsrichtung ist hierbei die Gegenrichtung zur üblichen Förderrichtung der Paketfördervorrichtung. Bei einer Paketübergabe müssen somit die Anschlagelemente jeweils lediglich von der Rückzugsposition in die Arbeitsposition und wieder zurück in die Rückzugsposition bewegt werden. Antrieb und Steuerung solcher Anschlagelemente sind wesentlich einfacher als diejenigen der bekannten Ausstossvorrichtung. Der Schlitten der Annahmestation kann deshalb mit einem geringeren Gewicht und mit weniger Einzelteilen hergestellt werden. Dadurch können die Herstellungskosten wesentlich gesenkt werden.

Nach einer Weiterbildung der Erfindung ist vorgesehen, dass die Anschlagelemente in Längsrichtung der jeweiligen Paketfördervorrichtung verstellbar sind. Diese Verstellbarkeit dient nicht zum Bewegen der Pakete, sondern lediglich zum Einstellen der geeigneten Position des entsprechenden Anschlagelementes bei einem Formatwechsel der Pakete. Eine solche Verstellung kann vergleichsweise einfach, beispielsweise mit einer Spindel erfolgen. Vorzugsweise werden die Anschlagelemente so auf dem Schlitten positioniert, dass sie in der Arbeitsstellung einen vergleichsweise kleinen Abstand zum Paket aufweisen. Die Pakete müssen dann mit dem Paketgreifer um eine vergleichsweise kleine Distanz bewegt werden, bis sie am entsprechenden Anschlagelement anliegen.

Nach einer Weiterbildung der Erfindung ist vorgesehen, dass die Anschlagelemente jeweils einen Sensor aufweisen, mit dem in der Rückzugsposition des entsprechenden Anschlagelementes feststellbar ist, ob dieses von einem Paket vollständig überfahren worden ist. Damit kann sichergestellt werden, dass das entsprechende Anschlagelement jeweils im Abstand zu einer Rückseite des Paketes in die Arbeitsstellung bewegt wird. Das entsprechende Anschlagelement kann somit sofort in die Arbeitsposition bewegt werden, sobald der Sensor das entsprechende vollständige Überfahren des Anschlagelementes feststellt. Der Sensor gibt ein entsprechendes Signal an die Steuervorrichtung weiter, welche entsprechend die Bewegung des Anschlagelementes von der Rückzugsposition in die Arbeitsposition steuert. Mit einem solchen Sensor können auch eventuelle Störungen in der Annahmestation festgestellt werden.

Die Anschlagelemente bestehen gemäss einer Weiterbildung der Erfindung jeweils aus zwei sich vertikal erstreckenden, stabförmigen und im Abstand zueinander angeordneten Teilen. Diese durchgreifen in der Arbeitsposition jeweils einen in der Paketfördervorrichtung ausgebildeten Zwischenraum. Durch eine Rückwärtsbewegung der Paketfördervorrichtung kann bei der Positionierung eines Paketes an dem entsprechenden Anschlagelement bzw. an den beiden stabförmigen Teilen die Bewegung des Paketgreifers unterstützt werden. Hierbei ist eine exakte Ausrichtung an den beiden genannten Teilen möglich. Die Positionierung der Pakete jeweils quer zur Transportrichtung portrichtung der Paketfördervorrichtung erfolgt durch Zentriermittel der entsprechenden Paketkammer. Die Zentriermittel sind insbesondere verschiebbare Seitenwände.

Beim erfindungsgemässen Verfahren ist vorgesehen, dass die Pakete bzw. ein Paket jeweils mit der Paketfördervorrichtung in eine vordere Halteposition gefahren werden und dass die Anschlagelemente jeweils anschliessend im Abstand zu einer Rückseite des Paketes aus der Rückzugsposition in die Arbeitsposition bewegt werden. Danach werden die Pakete bzw. wird das Paket mit dem Paketgreifer jeweils gegen eines der Anschlagelemente bzw. gegen die Anschlagelemente geschoben und an diese angelegt. Dabei werden die Greiffinger des Paketgreifers in die Zwischenräume der Paketfördervorrichtung eingefahren. Die Halteposition ist die Position, in welcher das entsprechende Anschlagelement vollständig überfahren wurde. Die Positionierung des entsprechenden Paketes am Anschlagelement erfolgt mit einer Schubbewegung des Paketgreifers und vorzugsweise einer gleichzeitigen Rückwärtsbewegung der Paketfördervorrichtung. Mit der genannten Überwachung der Pakete mittels eines Sensors können diese Arbeitsabläufe sehr schnell und präzis durchgeführt werden. Da die Anschlagelemente auf dem Schlitten gelagert sind, kann dieser wie bisher zum Beschicken der beiden Paketkammern quer zur Förderrichtung bewegt werden.

Möglich ist auch ein Verfahren, bei dem eine der beiden Paketkammern zur Übergabe eines besonders grossen Paketes verbreitert wird, so dass in dieser Paketkammer das Paket gegen beide Anschlagelemente positionierbar ist. Entsprechend werden zum Fördern dieses besonders grossen Paketes in der erweiterten Paketkammer Teile der Paketfördervorrichtung verwendet, die ansonsten der anderen Paketkammer zugeordnet sind. Auch hier ist die Unterstützung der Schubbewegung des Paketes durch eine Rückwärtsbewegung der Paketfördervorrichtung vorteilhaft.

Vorteilhafte Weiterbildungen der Erfindung ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine räumliche Ansicht einer Annahmestation, wobei Teile aus zeichnerischen Gründen weggelassen sind,
- Figur 2: eine weitere Ansicht der Annahmestation,
- Figur 3: eine räumliche Ansicht des Paketgreifers,
- Fig.4 bis 9: weitere Ansichten mit unterschiedlichen Phasen bei der Übergabe eines Paketes an den Greifer und
- Figur 10: eine räumliche Ansicht einer beladenen Palette.

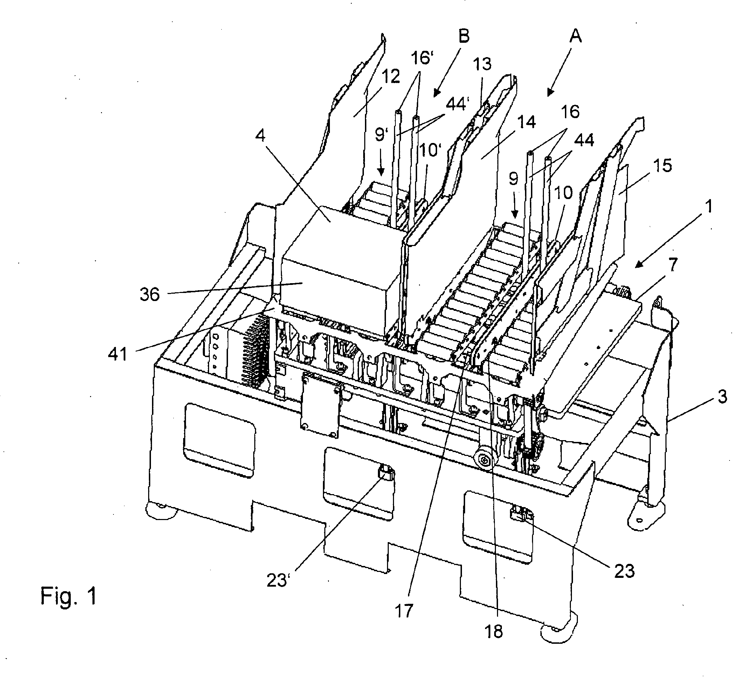

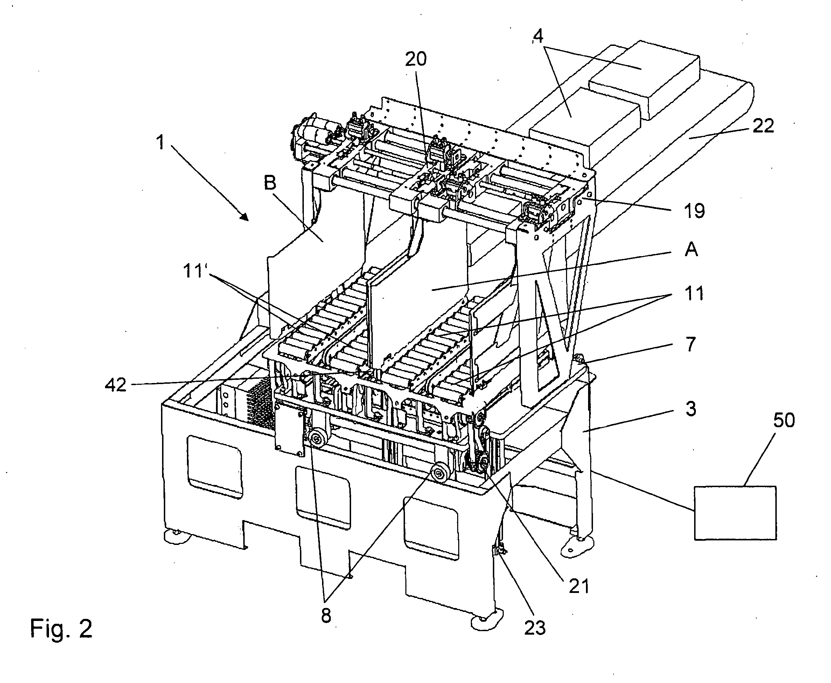

Die Annahmestation 1 einer Palettiereinrichtung besitzt gemäss den Figuren 1 und 2 ein Maschinengestell 3, auf dem ein Schlitten 7 gelagert ist. Dieser Schlitten 7 ist auf Rollen 8 quer zur Förderrichtung einer Paketfördervorrichtung 9, 9' und ebenso quer zur Förderrichtung einer in Figur 2 gezeigten Transportvorrichtung 22 gesteuert verfahrbar. In der in Figur 2 gezeigten Position des Schlittens 7 ist eine Paketkammer B der Annahmestation 1 so positioniert, dass auf der Transportvorrichtung 22 geförderte Pakete 4 in diese Paketkammer B abgelegt werden können. In einer hier nicht gezeigten weiteren Position des Schlittens 7 befindet sich eine Paketkammer A der Annahmestation 1 so vor der Transportvorrichtung 22, dass Pakete 4 in diese Paketkammer A abgelegt werden können. Die Transportvorrichtung 22 ist somit ortsfest, während der Schlitten 7 verstellt wird. Die beiden Paketkammern A und B können somit nacheinander jeweils mit einem Paket 4 beladen werden.

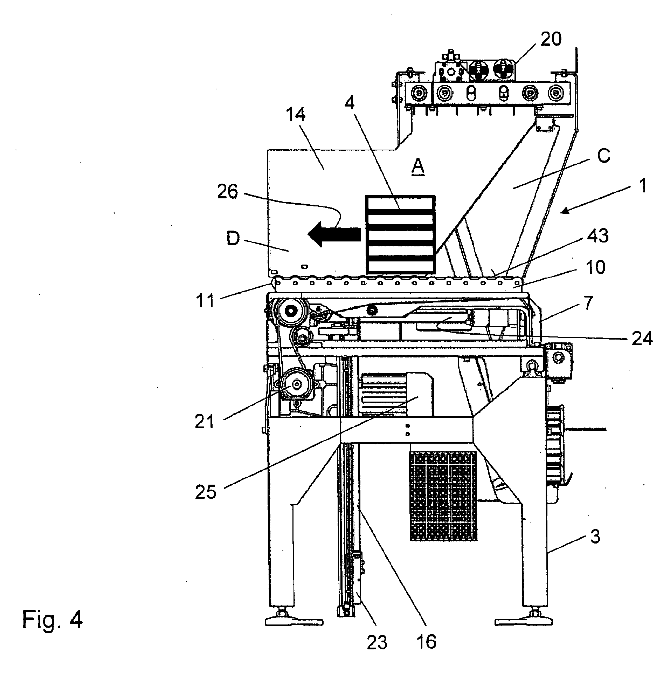

Jede der Paketkammern A und B ist einer Paketfördervorrichtung 9 bzw. 9' zugeordnet. Mit dieser können die Pakete 4 jeweils in der entsprechenden Paketkammer A bzw. B von einer Annahmestelle C zu einer Übergabestelle D transportiert werden (Figur 4). In der Figur 1 befindet sich das gezeigte Paket 4 in der Übergabestelle D. In dieser Position ist eine Vorderseite 36 des Paketes 4 im Wesentlichen bündig zu einer Frontseite 41 des Schlittens 7. In der Annahmestelle C befindet sich das Paket 4 am hinteren Ende der Paketfördervorrichtung 9, 9'. Die beiden Paketfördervorrichtungen 9 und 9' bestehen jeweils aus einem Förderband 10 bzw. 10' und zwei parallel zu diesen verlaufenden Reihen aus Rollen 11 bzw. 11'. Ein weiteres Förderband 42 befindet sich zwischen den genannten Förderbändern 10 und 10'. Die Rollen 11 und 11' sind ebenfalls angetrieben. Für den Antrieb der Förderbänder 10, 10' und 42 sowie der Rollen 11 und 11' ist eine Antriebsvorrichtung 21 vorgesehen, die mit einem in Figur 4 gezeigten Motor 25 verbunden ist.

Die Paketkammer A weist zwei Zentrierwände 14 und 15 und die Paketkammer B zwei Zentrierwände 12 und 13 auf, die jeweils plattenförmig ausgebildet sind und die mittels einer Verstellvorrichtung 20 gemäss Figur 2 an einem Träger 19 so gelagert sind, dass sie quer zur Transportrichtung horizontal verschiebbar sind. In der in den Figuren 1 und 2 gezeigten Stellung sind die Zentrierwände 12 bis 15 so angeordnet, dass die beiden Paketkammern A und B im Wesentlichen gleich breit sind und in denen somit jeweils im Wesentlichen gleich breite Pakete 4 transportiert werden können. An der Übergabestelle D können dann entsprechend zwei Pakete 4 bereitgestellt werden, die vom Paketgreifer 2 gleichzeitig gefasst und palettiert werden können. Die Zentrierwände 12 bis 15 können jedoch mittels der Verstellvorrichtung 20 motorisch gesteuert so verstellt werden, dass beispielsweise die Paketkammer A so weit ist, dass in dieser mit den Förderbändern 10' und 42 sowie den Rollen 11 und 11' ein besonders breites Paket 4' von der Annahmestelle C zur Übergabestelle D transportiert werden kann. In diesem Fall wird nur das Paket 4' vom Paketgreifer 2 übernommen und palettiert. Die Verstellbarkeit der Zentrierwände 12 bis 15 und damit der Paketkammern A, B ist aber für die vorliegende Erfindung nicht zwingend.

Auf dem Schlitten 7 sind zwei Anschlagelemente 16 und 16' gelagert, die jeweils mit einem Stellzylinder 23, 23' zwischen einer Rückzugsposition und einer Arbeitsposition bewegbar sind. In den Figuren 1 und 2 sind die Anschlagelemente 16 und 16' in der Arbeitsposition gezeigt. In dieser Position ragen die Anschlagelemente 16 und 16' in die Paketkammer A bzw. B hinein. In der Rückzugs- oder auch Ruheposition befinden sich die Anschlagelemente 16 und 16' unterhalb einer in Figur 4 gezeigten Oberseite 43 der Paketfördervorrichtung 9 bzw. 9'. Mit der ebenfalls in Figur 4 angedeuteten Spindel 24 können die Anschlagelemente 16 und 16' zur Anpassung an das Format der Pakete 4, 4' jeweils in oder entgegen der Transportrichtung verstellt werden.

Wie die Figur 1 zeigt, besitzen die Anschlagelemente 16 und 16' jeweils zwei stangenförmige sich vertikal erstreckende Teile 44 bzw. 44', die im Abstand zueinander angeordnet sind. Diese Teile 44 bzw. 44' ragen in der Arbeitsstellung jeweils durch einen Zwischenraum 17 bzw. 18 hindurch, die sich gemäss Figur 1 links und rechts des Förderbandes 10 bzw. 10' erstrecken. Die Zwischenräume 17 und 18 bestehen jeweils zwischen dem Förderband 10, 10' sowie den Rollen 11 bzw. 11' und erstrecken sich über die ganze Länge der Annahmestation 1. Die Stellzylinder 23, 23' und die Spindel 24 sind über eine in Figur 2 gezeigte Steuervorrichtung 50 gesteuert. Die Verstellungen zwischen der Rückzugsposition und der Arbeitsposition und auch die Verstellung mittels der Spindel 24 erfolgt somit automatisch gesteuert.

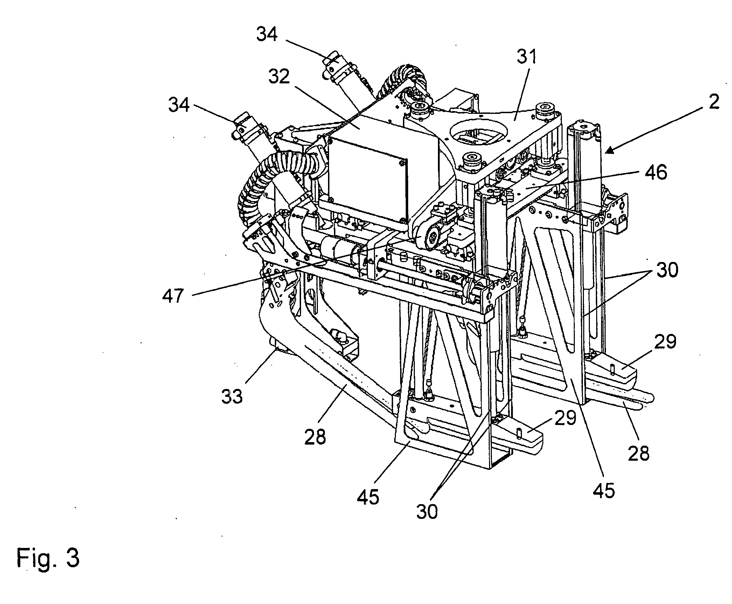

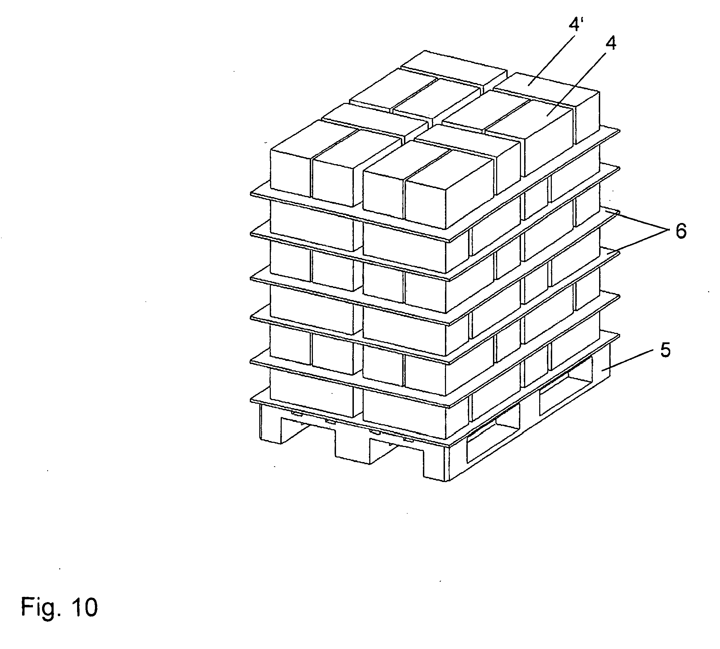

Die Pakete 4 werden jeweils einzeln oder paarweise mit dem in Figur 3 gezeigten Paketgreifer 2 gefasst und palettiert, so dass schliesslich diese Pakete 4 gemäss Figur 10 auf einer Palette 5 angeordnet und palettiert transportiert werden können. In der Figur 10 sind unterschiedliche Pakete 4 und 4' palettiert. Grundsätzlich können auch gleiche Pakete 4 oder mehr als zwei unterschiedliche Pakete palettiert werden. Schichtweise sind hier in an sich bekannter Weise Zwischenpappen 6 vorgesehen, die aus einem entsprechenden Lager mit dem in Figur 3 angedeuteten Zwischenpappengreifer 33 gefasst und abgelegt werden können. Der Paketgreifer 2 kann mit einer hier nicht gezeigten Vorrichtung in sämtlichen Raumrichtungen zwischen der Palette 5 und der Annahmestation 1 bewegt werden. Zu seiner Befestigung an dieser Vorrichtung besitzt der Paketgreifer 2 eine Tragplatte 31, unterhalb welcher ein Führungsbalken 46 befestigt ist. An diesem sind zwei Gestellteile 45 gelagert, die mit einer Antriebsvorrichtung 47 relativ zueinander bewegbar sind. Der Abstand zwischen den beiden Gestellteilen 45 kann somit verstellt werden. Die kastenförmigen und vorn offenen Gestellteile 45 besitzen frontseitig jeweils zwei Anschlagkanten 30. Diese werden gemäss Figur 3 jeweils von Stempeln 29 überragt, die vertikal verstellbar sind. Diese Stempel 29 arbeiten zum Greifen eines Paketes 4 bzw. 4' mit jeweils einem Finger 28 zusammen. Die Finger 28 sind jeweils mit einem Stellzylinder 34 zwischen der in Figur 3 rechts gezeigten Arbeitsstellung und der links gezeigten Rückzugsstellung bewegbar. Jeweils mit einem Finger 28 und einem Stempel 29 kann ein Paket 4 gefasst werden. Dieses ist hierbei an den entsprechenden beiden Anschlagkanten 30 positioniert. Besonders grosse Pakete 4' können mit beiden Fingern 28 und beiden Stempeln 29 gleichzeitig gefasst werden. Das Paket 4' liegt dann entsprechend an allen vier Anschlagkanten 30 an. Die Bewegungen der Stempel 29 der Finger 28 und des Zwischenpappengreifers 33 sind von einer mit der Steuervorrichtung 50 der Annahmestation 1 zusammenwirkenden Steuervorrichtung 32 gesteuert. Natürlich kann der Paketgreifer auch ausschliesslich über die Steuervorrichtung 50 der Annahmestation 1 gesteuert werden, d.h. die Palettiereinrichtung besitzt in diesem Fall eine einzige, gemeinsame Steuervorrichtung.

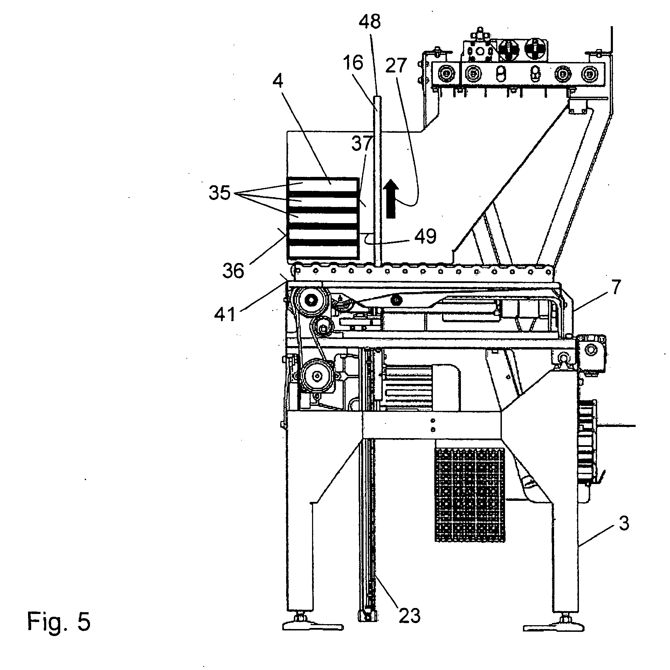

In den Figuren 4 bis 9 wird nachfolgend die Paketübergabe von der Annahmestation 1 an den Paketgreifer 2 näher erläutert. Die Figur 4 zeigt den Transport eines Paketes 4 in der Paketkammer A der Annahmestation 1, in Richtung des Pfeils 26 von der Annahmestelle C zur Übergabestelle D. Die Bewegung erfolgt somit in Figur 4 von rechts nach links. Der Transport des Paketes 4 erfolgt mit dem Förderband 10 sowie den Rollen 11. Diese fördern das Paket 4 bis zu der in Figur 5 gezeigten Halteposition. In dieser ist wie ersichtlich die Vorderseite 36 des Paketes 4 im Wesentlichen bündig zur Frontseite 41 des Schlittens 7. Die Vorderseite 36 und auch eine Rückseite 37 des Paketes 4 sind durch eine Mehrzahl von Druckprodukten 35 gebildet, welche horizontal gestapelt sind. Die Druckprodukte 35 können beispielsweise mit einer hier nicht gezeigten Folie oder Bändern zusammengehalten sein. Dies ist jedoch nicht zwingend.

Wird das Paket 4 von der in Figur 4 gezeigten Position in die in Figur 5 gezeigte Halteposition bewegt, so überfährt dieses das sich in seiner Rückzugsposition befindende Anschlagelement 16. Dieses Überfahren wird mit einem Sensor 48 überwacht, der sich gemäss Figur 5 am oberen Ende des Anschlagelementes 16 befindet. Der Sensor 48 kann beispielsweise ein optischer oder elektrischer Sensor sein. Sobald die Rückseite 37 des Paketes 4 den Sensor 48 überfahren hat, wird dies vom Sensor 48 bzw. der mit dem Sensor 48 verbundenen Steuerung 50 registriert. Das Anschlagelement 16 wird daraufhin von der in Figur 4 dargestellten Rückzugsposition in die in Figur 5 gezeigte Arbeitsposition bewegt. Diese von unten nach oben erfolgende Bewegung ist in Figur 5 mit dem Pfeil 27 angedeutet. Zwischen der Rückseite 37 des Paketes 4 und dem ausgefahrenen Anschlagelement 16 besteht gemäss Figur 5 ein Abstand 49, der im Vergleich zur Länge des Paketes 4 relativ klein ist und beispielsweise wenige Zentimeter betragen kann. Grundsätzlich wäre auch eine Anordnung der Anschlagelemente 16 und 16' denkbar, bei welcher diese beispielsweise von oben nach unten in die Arbeitsposition und dann nach oben in die Rückzugsposition verfahren werden. Denkbar ist auch eine seitliche Verschiebung der Anschlagelemente 16 und 16' zwischen den beiden genannten Positionen.

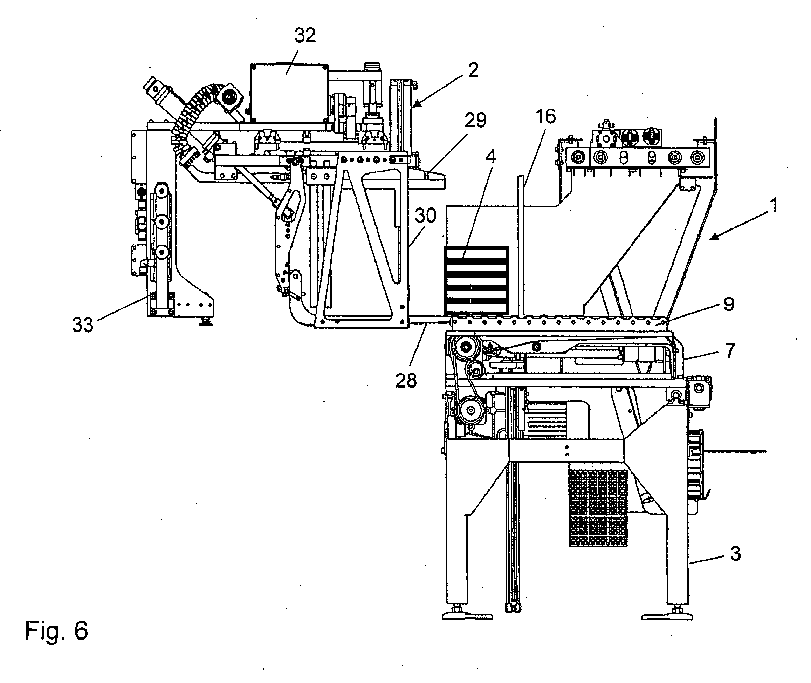

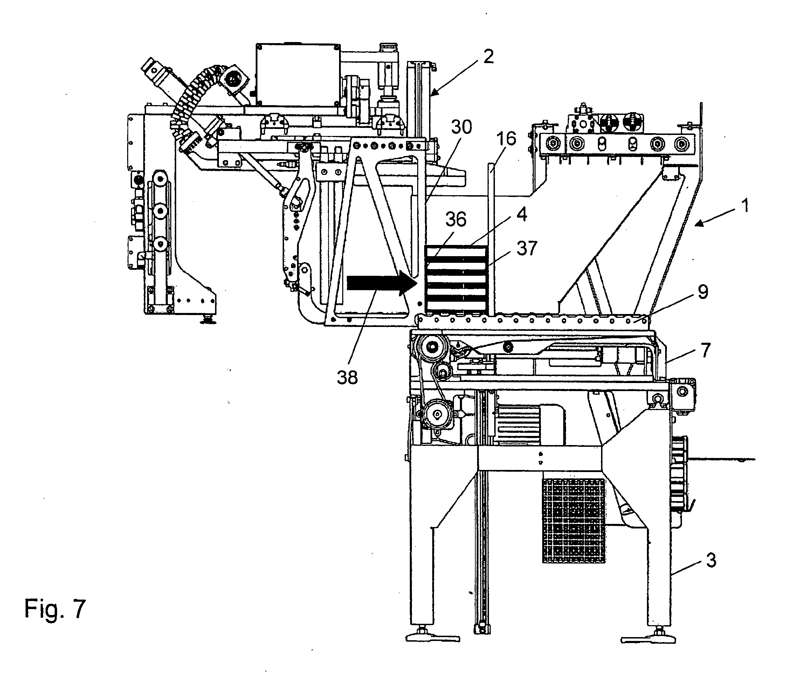

Um das Paket 4 von der Annahmestation 1 zu übernehmen, wird der Paketgreifer 2 zunächst in die in Figur 6 gezeigte Position bewegt. Dabei wird der Paketgreifer 2 so positioniert und bewegt, dass seine Finger 28 unterhalb des Paketes 4 in die Zwischenräume 17 und 18 der Paketfördervorrichtung 9 einfahren. Der Stempel 29 befindet sich hierbei wie gezeigt in einer angehobenen Stellung. Der Paketgreifer 2 wird nun gemäss Figur 7 in Richtung des Pfeils 38 weiterbewegt, bis seine Anschlagkanten 30 an der Vorderseite 36 des Paketes 4 anliegen. Durch eine weitere Bewegung des Paketgreifers 2 in Richtung des Pfeils 38 wird nun das Paket 4 gegen das Anschlagelement 16 bewegt, bis es mit seiner Rückseite 37 an diesem anliegt. Die Bewegung des Paketes 4 gegen das Anschlagelement 16 kann hierbei durch eine Rückwärtsbewegung des Förderbandes 10 sowie der Rollen 11 der Paketfördervorrichtung 9 unterstützt sein. Mit den Zentrierwänden 14 und 15 wird das Paket 4 zentriert. Eine solche Zentrierung kann aber auch vor der in Figur 7 gezeigten Stellung erfolgen.

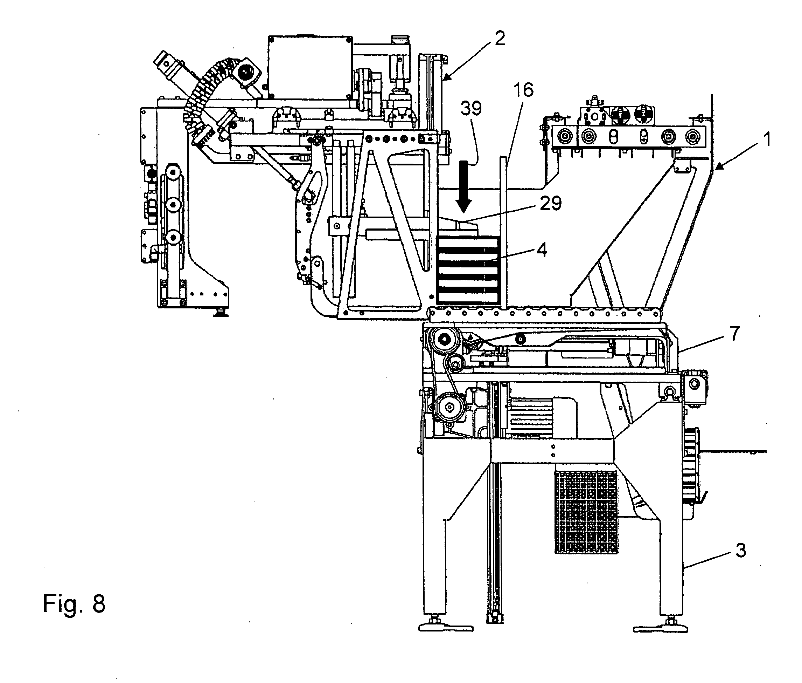

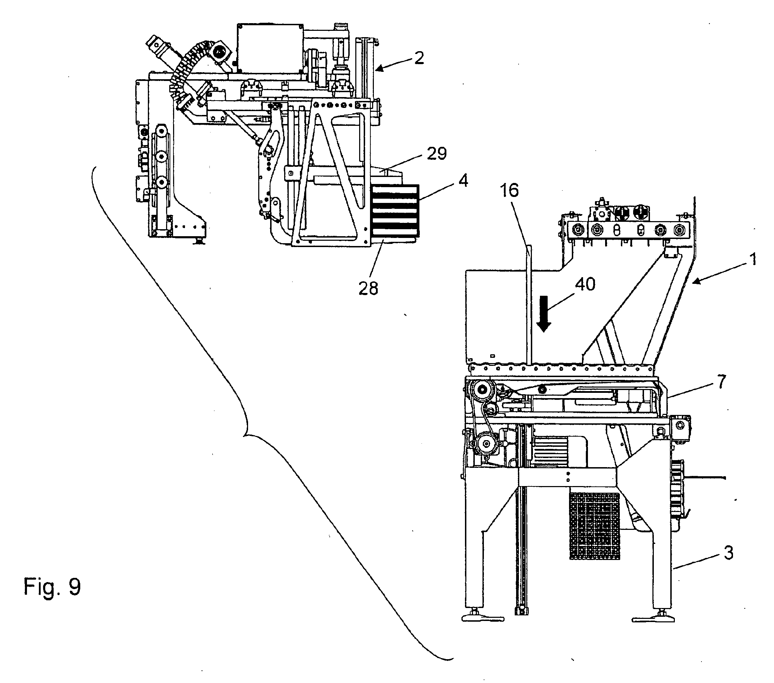

Liegt das Paket 4 mit seiner Vorderseite 36 an den Anschlagkanten 30 des Paketgreifers 2 und mit seiner Rückseite 37 am Anschlagelement 16 an, so wird der Stempel 29 gemäss Figur 8 in Richtung des Pfeils 39 auf das Paket 4 gesenkt, so dass dieses schliesslich zwischen dem Stempel 29 und dem Finger 28 festgeklemmt ist. Das in der anderen Paketkammer B der Annahmestation 1 geförderte, hier nicht gezeigte weitere Paket 4 wird auf die gleiche Weise vom Paketgreifer 2 übernommen. Dabei können alle Bewegungen parallel und gleichzeitig erfolgen. In der Figur 8 werden somit zwei Pakete 4 mit jeweils einem Stempel 29 und einem Finger 28 positioniert am Paketgreifer 2 gehalten. Alternativ kann ein einziges Paket 4' von zwei Fingern 28 und zwei Stempeln 29 gehalten werden. Die Bewegung dieses Paketes 4' kann gleich erfolgen wie die oben erläuterte Bewegung der beiden Pakete 4. Die Anschlagelemente 16 und 16' werden nun gemäss Figur 9 in der Richtung des Pfeils 40 in die Rückzugsposition verfahren, so dass nachfolgende Pakete 4 zur Übergabestelle D der Annahmestation 1 gefördert werden können.

Sind die beiden Pakete 4 bzw. das einzelne Paket 4' vom Paketgreifer 2 erfasst, so wird dieser gemäss Figur 9 von der Annahmestation 1 wegbewegt. Der Paketgreifer 2 wird nun so gesteuert, dass er die Pakete 4 bzw. das Paket 4' auf die Palette 5 ablegt. Dazu werden die Stempel 29 wieder angehoben und die Finger 28 zurückgezogen, so dass der Paketgreifer 2 von den Paketen 4 bzw. dem einzelnen Paket 4' weggefahren werden kann und für eine weitere Übernahme von Paketen 4, 4' bereitsteht.

## Patentansprüche

1. Palettiereinrichtung mit einer Annahmestation (1) und einem Paketgreifer (2), umfassend:
einen auf einem Maschinengestell (3) der Annahmestation (1) seitlich verfahrbar gelagerten Schlitten (7), eine auf dem Schlitten (7) angeordnete Paketfördervorrichtung (9, 9') zum Fördern von Paketen (4, 4') von einer Annahmestelle (C) zu einer Übergabestelle (D), von welcher die Pakete (4, 4') jeweils mit dem Paketgreifer (2) entnehmbar sind, wenigstens zwei auf dem Schlitten (7) angeordnete Paketkammern (A, B), in denen die Pakete (4, 4') zentrierbar sind und eine Steuervorrichtung, wobei jeder Paketkammer (A, B) ein auf dem Schlitten (7) gelagertes Anschlagelement (16, 16') zugeordnet und zwischen einer Arbeitsposition sowie einer Rückzugsposition bewegbar ist, wobei die Anschlagelemente (16, 16') in der Arbeitsposition in die jeweilige Paketkammer (A, B) hineinragen, **dadurch gekennzeichnet, dass** der Paketgreifer (2) und die Annahmestation (1) über die Steuervorrichtung so gesteuert werden, dass die Pakete (4, 4') bzw. ein Paket (4') jeweils mit der Paketfördervorrichtung (9, 9') in eine vordere Halteposition gefahren werden, dass die Anschlagelemente (16, 16') anschliessend im Abstand zu einer Rückseite (37) des entsprechenden Paketes (4, 4') aus der Rückzugsposition in die Arbeitsposition gefahren werden und dass die Pakete (4) bzw. das Paket (4') mit dem Paketgreifer (2) jeweils gegen eines der Anschlagelemente (16, 16') bzw. gegen die Anschlagelemente (16, 16') geschoben und an diese angelegt werden.

2. Palettiereinrichtung nach Anspruch 1, **dadurch gekennzeichnet, dass** die Anschlagelemente (16, 16') auf dem Schlitten (7) in Längsrichtung der jeweiligen Paketfördervorrichtung (9, 9') verstellbar sind.

3. Palettiereinrichtung nach Anspruch 1 oder 2, **dadurch gekennzeichnet, dass** die Anschlagelemente (16, 16') jeweils einen Sensor (48) aufweisen, mit dem in der Rückzugsposition das Überfahren von Paketen (4, 4') überwachbar ist.

4. Palettiereinrichtung nach Anspruch 3, **dadurch gekennzeichnet, dass** die Sensoren (48) jeweils an einem oberen Ende eines Anschlagelementes (16, 16') angeordnet sind, so dass diese Sensoren (48) jeweils gegen eine Unterseite eines überfahrenden Paketes (4, 4') gerichtet sind.

5. Palettiereinrichtung nach einem der Ansprüche 1 bis 4, **dadurch gekennzeichnet, dass** die Anschlagelemente (16, 16') jeweils wenigstens zwei sich vertikal erstreckende, stabförmige und im Abstand zueinander angeordnete Teile (44, 44') aufweisen.

6. Palettiereinrichtung nach einem der Ansprüche 1 bis 5, **dadurch gekennzeichnet, dass** die Anschlagelemente (16, 16') mit einem Stellzylinder (23, 23') jeweils vertikal bewegbar und mit einer Spindel (24) jeweils horizontal verstellbar sind.

7. Verfahren zum Übergeben von Paketen (4, 4') von einer Annahmestation an einen Paketgreifer einer Palettiereinrichtung nach Anspruch 1, wobei die Pakete (4) bzw. ein Paket (4') jeweils mit der Paketfördervorrichtung (9, 9') in eine vordere Halteposition gefahren werden, dass die Anschlagelemente (16, 16') anschliessend im Abstand zu einer Rückseite (37) des entsprechenden Paketes (4, 4') aus der Rückzugsposition in die Arbeitsposition gefahren werden und dass die Pakete (4) bzw. das Paket (4') mit dem Paketgreifer (2) jeweils gegen eines der Anschlagelemente (16, 16') bzw. gegen die Anschlagelemente (16, 16') geschoben und an diese angelegt werden.

8. Verfahren nach Anspruch 7, **dadurch gekennzeichnet, dass** der Paketgreifer (2) zum Übernehmen wenigstens eines Paketes (4, 4') mit zwei Greiffingern (28) unter das sich in der genannten Halteposition befindliche Paket fährt und dieses gegen wenigstens ein Anschlagelement (16, 16') schiebt.

9. Verfahren nach Anspruch 7 oder 8, **dadurch gekennzeichnet, dass** die Paketfördervorrichtung (9, 9') so gesteuert ist, dass sie zum Positionieren der Pakete (4, 4') zur Unterstützung der Schubbewegung des Paketgreifers (2) rückwärts bewegt wird.

10. Verfahren nach einem der Ansprüche 7 bis 9, **dadurch gekennzeichnet, dass** das Überfahren wenigstens eines sich in Rückzugsposition befindlichen Anschlagelementes (16, 16') mit einem Sensor (48) überwacht wird und dass aufgrund eines Sensorsignals wenigstens ein Anschlagelement (16, 16') von der Rückzugsposition in die Arbeitsposition bewegt wird.

11. Verfahren nach einem der Ansprüche 7 bis 10, **dadurch gekennzeichnet, dass** der Paketgreifer (2) frontseitig wenigstens zwei im Abstand zueinander angeordnete Anschlagkanten (30) aufweist und dass die Pakete (4) bzw. das Paket (4') mit diesen Anschlagkanten (30) gegen die Anschlagelemente (16, 16') geschoben werden.

## Claims

1. Palletising apparatus having a pick-up station (1) and a package gripper (2), comprising:
a slider (7) which is mounted to be displaceable laterally on a frame (3) of the pick-up station (1), a package feeding arrangement (9, 9') arranged on the slider (7) for feeding packages (4, 4') from a pick-up point (C) to a transfer point (D) from which the packages (4, 4') can each be taken by the package gripper (2), at least two package compartments (A, B) arranged on the slider (7) in which the packages (4, 4') can be centralised, and a controlling arrangement, a stop member (16, 16') mounted on the slider (7) being associated with each package compartment (A, B) and being movable between a working position and a withdrawn position, the stop members (16, 16') projecting into the respective package compartments (A, B) in the working position, **characterised in that** the package gripper (2) and the pick-up station (1) are controlled by means of the controlling arrangement in such a way that the packages (4, 4') or a package (4'), as the case may be, are/is moved by the package feeding arrangement (9, 9') to a held position at the front, **in that** the stop members (16, 16') are then moved from the withdrawn position to the working position at a distance from a rear face (37) of the package (4, 4') concerned, and **in that** the packages (4, 4') or package (4') are/is thrust towards respective ones of the stop members (16, 16') or towards the stop members (16, 16') by the package gripper (2) and are/is pressed against them.

2. Palletising apparatus according to claim 1, **characterised in that** the stop members (16, 16') are adjustable on the slider (7) in the longitudinal directions of the respective package feeding arrangements (9, 9').

3. Palletising apparatus according to claim 1 or 2, **characterised in that** the stop members (16, 16') each have a sensor (48) by which the travel across of packages (4, 4') can be monitored in the withdrawn position.

4. Palletising apparatus according to claim 3, **characterised in that** the sensors (48) are each arranged at a top end of a stop member (16, 16') such that the said sensors (48) are each directed towards an underside of a package (4, 4') which travels across.

5. Palletising apparatus according to one of claims 1 to 4, **characterised in that** the stop members (16, 16') each have at least two vertically extending rod-like parts (44, 44') which are arranged at a distance from one another.

6. Palletising apparatus according to one of claims 1 to 5, **characterised in that** the stop members (16, 16') can each be moved vertically by a positioning cylinder (23, 23') and can each be adjusted horizontally by a spindle (24).

7. Method of transferring packages (4, 4') from a pick-up station to a package gripper of a palletising apparatus according to claim 1, wherein the packages (4, 4') or a package (4'), as the case may be, are/is moved by the package feeding arrangement (9, 9') to a held position at the front, in that the stop members (16, 16') are then moved from the withdrawn position to the working position at a distance from a rear face (37) of the package (4, 4') concerned, and in that the packages (4, 4') or package (4') are/is thrust towards respective ones of the stop members (16, 16') or towards the stop members (16, 16') by the package gripper (2) and are/is pressed against them.

8. Method according to claim 7, **characterised in that**, to take hold of at least one package (4, 4'), the package gripper (2) moves two gripping fingers (28) under the package, which is situated in the said held position, and thrusts it towards at least one stop member (16, 16').

9. Method according to claim 7 or 8, **characterised in that** the package feeding arrangement (9, 9') is controlled in such a way that, to position the packages (4, 4'), it is moved backwards to assist the thrusting movement of the package gripper (2).

10. Method according to one of claims 7 to 9, **characterised in that** the changeover movement of at least one stop member (16, 16') which is situated in the withdrawn position is monitored by a sensor (48) and **in that** at least one stop member (16, 16') is moved from the withdrawn position to the working position in response to a sensor signal.

11. Method according to one of claims 7 to 10, **characterised in that** the package gripper (2) has, at the front face, at least two abutment edges (30) which are arranged at a distance from one another and **in that** the packages (4) or package (4') are thrust towards the stop members (16, 16') by these abutment edges (30).

## Revendications

1. Installation de palettisation équipée d'un poste de réception (1) et d'un système (2) de saisie de paquets, comprenant :
un chariot (7) monté à déplacement latéral sur un bâti de machine (3) dudit poste de réception (1) ; un dispositif (9, 9') de convoyage de paquets, placé sur ledit chariot (7) et conçu pour convoyer des paquets (4, 4') depuis une zone de réception (C) jusqu'à une zone de transfert (D) à partir de laquelle les paquets (4, 4') peuvent être respectivement prélevés à l'aide dudit système (2) de saisie des paquets ; au moins deux compartiments (A, B) agencés sur ledit chariot (7), dans lesquels lesdits paquets (4, 4') peuvent être centrés ; et un dispositif de commande, un élément de butée (16, 16'), monté sur ledit chariot (7), étant affecté à chaque compartiment (A, B) à paquets, et étant mobile entre un emplacement de travail et un emplacement de retrait, sachant qu'à l'emplacement de travail, les éléments de butée (16, 16') pénètrent dans le compartiment (A, B) considéré, **caractérisée par le fait que** le système (2) de saisie des paquets et le poste de réception (1) sont pilotés par l'intermédiaire du dispositif de commande, de façon telle que les paquets (4, 4'), ou un paquet (4'), soi(en)t respectivement amené(s) à un emplacement antérieur de retenue au moyen du dispositif (9, 9') de convoyage des paquets ; **par le fait que** les éléments de butée (16, 16') sont ensuite amenés de l'emplacement de retrait à l'emplacement de travail, à distance d'une face postérieure (37) du paquet (4, 4') correspondant ; et **par le fait qu'**à l'aide dudit système (2) de saisie des paquets, lesdits paquets (4) ou, respectivement, ledit paquet (4') est (sont) poussé(s) contre l'un des éléments de butée (16, 16'), ou contre lesdits éléments de butée (16, 16'), et mis en applique contre ce(s) derniers(s).

2. Installation de palettisation selon la revendication 1, **caractérisée par le fait que** les éléments de butée (16, 16') sont réglables, sur le chariot (7), dans la direction longitudinale du dispositif respectif (9, 9') de convoyage des paquets.

3. Installation de palettisation selon la revendication 1 ou 2, **caractérisée par le fait que** les éléments de butée (16, 16') sont respectivement pourvus d'un capteur (48) par lequel le transit de paquets (4, 4') peut être surveillé à l'emplacement de retrait.

4. Installation de palettisation selon la revendication 3, **caractérisée par le fait que** les capteurs (48) sont respectivement disposés à une extrémité supérieure d'un élément de butée (16, 16'), de telle sorte que ces capteurs (48) soient respectivement orientés vers une face inférieure d'un paquet (4, 4') en transit.

5. Installation de palettisation selon l'une des revendications 1 à 4, **caractérisée par le fait que** les éléments de butée (16, 16') sont composés, à chaque fois, d'au moins deux parties (44, 44') en forme de tiges, s'étendant verticalement et placées à distance l'une de l'autre.

6. Installation de palettisation selon l'une des revendications 1 à 5, **caractérisée par le fait que** les éléments de butée (16, 16') peuvent être respectivement mus dans le sens vertical, à l'aide d'un vérin de réglage (23, 23'), et peuvent être respectivement réglés dans le sens horizontal à l'aide d'une broche (24).

7. Procédé de transfert de paquets (4, 4'), à partir d'un poste de réception, à un système de saisie de paquets d'une installation de palettisation conforme à la revendication 1, dans lequel les paquets (4), ou un paquet (4'), est (sont) respectivement amené(s) à un emplacement antérieur de retenue au moyen du dispositif (9, 9') de convoyage des paquets, les éléments de butée (16, 16') sont ensuite amenés de l'emplacement de retrait à l'emplacement de travail, à distance d'une face postérieure (37) du paquet (4, 4') correspondant et, à l'aide dudit système (2) de saisie des paquets, lesdits paquets (4) ou, respectivement, ledit paquet (4') est (sont) poussé(s) contre l'un des éléments de butée (16, 16'), ou contre lesdits éléments de butée (16, 16'), et mis en applique contre ce(s) derniers(s).

8. Procédé selon la revendication 7, **caractérisé par le fait qu'**en vue de prélever au moins un paquet (4, 4'), le système (2) de saisie des paquets s'engage au-dessous du paquet occupant l'emplacement de retenue précité, par deux doigts de préhension (28), puis pousse ledit paquet contre au moins un élément de butée (16, 16').

9. Procédé selon la revendication 7 ou 8, **caractérisé par le fait que** le dispositif (9, 9') de convoyage des paquets est commandé de façon telle qu'il soit animé d'un mouvement rétrograde, en vue du positionnement des paquets (4, 4'), afin d'assister le mouvement de poussée du système (2) de saisie desdits paquets.

10. Procédé selon l'une des revendications 7 à 9, **caractérisé par le fait que** le franchissement d'au moins un élément de butée (16, 16'), occupant un emplacement de retrait, est surveillé au moyen d'un capteur (48) ; et **par le fait qu'**au moins un élément de butée (16, 16') est mû de l'emplacement de retrait à l'emplacement de travail, sur la base d'un signal émanant dudit capteur.

11. Procédé selon l'une des revendications 7 à 10, **caractérisé par le fait que** le système (2) de saisie des paquets est muni, frontalement, d'au moins deux arêtes de butée (30) situées à distance l'une de l'autre ; et **par le fait que** les paquets (4), ou le paquet (4'), est (sont) respectivement poussé(s) contre les éléments de butée (16, 16') par ces arêtes de butée (30).
